(19) Europäisches Patentamt
European Patent Office
Office européen des brevets

(11) EP 2 730 888 A1

(12) EUROPEAN PATENT APPLICATION

(43) Date of publication:
14.05.2014 Bulletin 2014/20

(51) Int Cl.:
$G01C\ 21/16^{(2006.01)}$     $G01C\ 22/00^{(2006.01)}$

(21) Application number: 12191669.6

(22) Date of filing: 07.11.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Ecole Polytechnique Fédérale de Lausanne (EPFL)
1015 Lausanne (CH)

(72) Inventors:
• Briod, Adrien
1018 Lausanne (CH)
• Zufferey, Jean-Christophe
1037 Etagnières (CH)
• Floreano, Dario
1162 St-Prex (CH)

(74) Representative: Leman Consulting S.A.
Chemin de Précossy 31
1260 Nyon (CH)

(54) **Method to determine a direction and amplitude of a current velocity estimate of a moving device**

(57)     A new method for the estimation of ego-motion (the direction and amplitude of the velocity) of a mobile device comprising optic-flow and inertial sensors (hereinafter the apparatus). The velocity is expressed in the apparatus's reference frame, which is moving with the apparatus. The method relies on short-term inertial navigation and the direction of the translational optic-flow in order to estimate ego-motion, defined as the velocity estimate (that describes the speed amplitude and the direction of motion). A key characteristic of the invention is the use of optic-flow without the need for any kind of feature tracking. Moreover, the algorithm uses the direction of the optic-flow and does not need the norm, thanks to the fact that the scale of the velocity is solved by the use of inertial navigation and changes in direction of the apparatus.

Figure 1

**Description**

# 1 INTRODUCTION

The present invention concerns a method to determine the ego-motion of a mobile device, or in other words, the estimation of the direction and amplitude of the velocity of the mobile device using embedded sensors, in particular inertial and optic-flow sensors.

By definition, the ego-motion not only comprises the speed and amplitude of the motion but also includes rotational speed. The estimation of the rotation speed is a solved problem nowadays thanks to the broadly available rate-gyroscopes, and the challenge really lies in the linear velocity estimation.

# 2 BACKGROUND

The topic of ego-motion estimation being widely researched, a lot of different solutions can be found in the literature. Vision, completed with other sensors or not, is a sensor modality that can be found in a large number of these solutions. Solutions not relying on vision are usually targeted at specific problems (such as airspeed sensors for unique direction of motion, or odometry for a ground platform, etc.) and don't offer an equivalently broad range of applications. Vision, however, can easily be used for most applications as cameras are easy to set-up on any type of platform, and consecutive visual information is directly related to motion, which makes it a perfect candidate for ego-motion estimation.

Two of the key image processing tools used in the task of ego-motion estimation are feature tracking and optic-flow extraction.

Feature tracking consist in detecting the position of a feature on a video image over multiple frames. Feature tracking involves detecting characteristic features on a video frame and matching them to previously seen features in order to track the same feature from frame to frame. This procedure is prone to the correspondence problem arising when features cannot be matched from frame to frame. Feature tracking requires cameras with good enough quality to detect details in an image, quite high computations for the feature extraction and matching algorithms, and enough memory to store the feature descriptions.

Optic-flow is the speed at which the image is moving over a small portion of the field of view, described by a 2-D vector expressed in the image sensor plane. Optic-flow extraction does not require high resolution cameras or a lot of processing as comparatively very simple methods exist for this task, that typically use the variation of light intensity over time, or pattern displacement. Optic-flow sensors thus exist in very small and cheap packages. The main advantage of optic-flow extraction is thus that it requires much less resources than feature tracking, in terms of hardware and software.

The main advantage of feature tracking is that the obtained information is correlated over relatively long periods of time (as long as the same features are tracked), whereas the information obtained from optic-flow is instantaneous and unrelated to preceding or succeeding measurements (because it is generated by different visual clues in the environment at all steps). This characteristic is what makes it possible for feature tracking-based solutions to extract some structure from the motion (SFM), because it is possible to correlate measurements from the same feature over several steps. This is true as well for optic-flow obtained from feature tracking (by derivating the position of a feature over time), because the optic-flow is always generated by the same feature.

All monocular vision-only solutions suffer from the so-called scale ambiguity when trying to estimate motion or structure as there is no way for any vision sensor to distinguish fast motion in a big environment to slow motion in a tiny environment. This is why some solutions for ego-motion estimation based on vision-only rely on assumptions about the environment (e.g size of known objects), or estimate the velocity up to a scale factor, or use two cameras for stereo vision. However, most solutions rely on an additional sensor modality in order to obtain an absolute velocity.

Several algorithms were suggested for optic-flow based ego-motion estimation [1, 2]. These solutions involve usually either wide-angle cameras or many individual optic-flow sensors. Such optic-flow-based methods can estimate the angular speed together with the direction of motion, however, the scale of the velocity remains unknown for the reasons described above (scale ambiguity). Some solutions can estimate approximately the velocity amplitude by making assumptions about the environment (such as using a known distribution of the distance to the environment), however this is only applicable to specific situations.

To overcome the scale ambiguity, a possible solution is to use distance sensors in order to extract absolute velocity from translational optic-flow. Typically, an additional downward looking ultrasonic distance sensor can be used, which results in a very good velocity estimation when coupled with a downward looking optic-flow sensor. Such a method has the drawback that it will only work below the limited range of the distance sensor and for relatively flat surfaces to ensure that the tracked features are all at the approximate distance given by the ultrasonic sensor.

Ego-motion can be obtained from visual SFM (Structure from Motion, which is very similar to SLAM - Simultaneous Localization and Mapping). Visual SFM is a very popular method in computer vision, that relies on feature tracking and aims at positioning a video camera with respect to these features while simultaneously determining their position in space (thus the environment structure). Once the camera position with respect to the environment is calculated, the ego-motion can be extracted from the position difference over multiple frames. In case of monocular visual SFM, the resulting estimation suffers from a scale ambiguity. Some solutions to this scale issue include detecting a pattern of known dimension, or making assumptions on the motion (known acceleration distribution) or on the distance distribution to the landmarks or by using an additional sensor, such as a pressure sensor or distance sensors.

A popular solution to the scale ambiguity problem is to use inertial sensors together with vision sensors. (Note: inertial sensors are usually comprised of a 3-axis rate-gyroscope and a 3-axis accelerometer). Methods coupling a visual SFM algorithm to inertial measurements were able to solve the scale factor problem by matching the measured accelerations to possible camera motion [3]. The algorithms require a relatively high computing power and memory, resulting in fairly bulky setups (when these algorithms aren't run offline on a computer or in simulation). An approach based on optic-flow is introduced in [4], where nine optic-flow measurements are used to perform some kind of SFM (the nine distances to the environment being estimated), which allows to estimate and control the velocity of an autonomous hovering MAV. However, strong assumptions on the environment's geometry (flat ground) had to be made in both of the latter cases. In [5], the velocity of a quadrotor is successfully estimated using inertial sensors corrected by two optic-flow measurements obtained from the tracking of two features on a camera, however the average depth to the features needs to be estimated and thus cannot change abruptly.

An approach distancing itself from SFM is based on the so-called epipolar constraint [6, 7]. These algorithms rely on feature tracking, but don't rely on the estimation of the features' positions in space, which greatly reduces the processing, by reducing the amount of unknown states to estimate [6]. However this approach also requires features to be tracked for many video frames, like in [7] or [6] where a wide-angle camera is used in order to keep the features in line-of-sight as long as possible. The algorithm proposed in [6] is tested in simulation and real experiments. However, the setup includes high-end inertial sensors and ideal assumptions are made (perfect orientation is known), which makes it hard to judge from the results how much the success is due to this sensor choice. Scale ambiguity isn't solved by epipolar constraint, typically in [8], the approach suffers from errors on the velocity estimation along the direction of motion, which pushed the authors to add an airspeed sensor. Similarly in [9], the filter does not perform well in estimating the velocity.

### 2.1 Discussion

It can be seen from the prior art that vision only cannot reliably estimate ego-motion because of the scale ambiguity, but that the incorporation of additional sensors have successfully solved this issue. From these sensors, inertial sensors stand out as very versatile as they are extremely easy to integrate to any platform, are light-weight and very cheap.

A distinction has been made in the prior art between methods that rely on optic-flow and those that rely on feature tracking (whose differences are discussed above or in [6]). Even though feature tracking offers more information than optic-flow, it requires much more resources, whereas optic-flow has the advantage that it can be obtained with simpler setups, improving on cost and weight.

It can be seen from the prior art on vision and inertial sensors fusion for ego-motion estimation that very few solutions rely on optic-flow, but rather use feature tracking, and often SFM techniques. SFM techniques are successful, but require heavy computations to estimate plenty of additional variables non-related to ego-motion (such as feature positions). The few solutions that do use optic-flow [4, 5] and could potentially be miniaturized, are not appropriate to unstructured or rapidly changing environments because they rely on the estimation of distances to the regions where optic-flow is generated. Indeed, this technique is not appropriate if the distances change too fast (in case of unstructured environments or rapid motion of the sensors).

### 2.2 Brief description of the invention

We propose a method that relies on both optic-flow and inertial sensors to estimate ego-motion, without relying on any estimation of or assumption about the structure of the environment, which has no equivalent in the prior art. The key advantages of the invention are that the solution works in environments of all types and geometry, and it relies on optic-flow and inertial sensors only, allowing for an extremely small package (compared to feature tracking based solutions that require video cameras or the solutions that use distance sensors).

A key innovative step is the introduction of the optic-flow direction constraint. This constraint is used to correct for inertial sensor drift along the axes perpendicular to the direction of motion. This is why this method works best if there is sufficient motion of the mobile device (in particular: changes of direction) so that drift does not have time to accumulate along the direction of motion.

According to the invention, it is proposed a method to determine the direction and the amplitude of a current velocity estimate of a moving device comprising at least an optic-flow sensor producing at least a 2D optic-flow vector and an inertial sensor producing a linear acceleration vector, said optic-flow sensor having a predefined viewing direction relative to the moving device, said method comprising the steps of:

a. initializing to a default value a direction and amplitude of a current velocity estimate,

b. acquiring a linear acceleration vector from the inertial sensor,

c. calculating a velocity estimate prediction from the current velocity estimate and the linear acceleration vector by integrating the linear acceleration over time,

d. acquiring an optic-flow vector from at least one optic-flow sensor,

e. determining at least one measured direction value, a mathematical representation of the optic-flow direction from each optic-flow vector

f. calculating at least one direction prediction value, a mathematical representation of an optic-flow direction prediction in function of a velocity estimate prediction and a predefined viewing direction

g. calculating at least one error value between each measured direction value and the corresponding direction prediction value,

h. applying a correction to the velocity estimate prediction to obtain a new velocity estimate, said correction being determined thanks an optimization process so as to reduce the error value(s)

i. defining the current velocity estimate equal to the new velocity estimate

j. repeating the steps b to i.

### 2.3 Brief description of the drawings

The present invention will be better understood thanks to the attached figure, illustrating the three vectors involved in the translational optic-flow equation (2).

### 3 DESCRIPTION OF THE INVENTION

The invention consists in a new method for the estimation of ego-motion (the direction and amplitude of the velocity) of a mobile device comprising optic-flow and inertial sensors (hereinafter the apparatus). The velocity is expressed in the apparatus's reference frame, which is moving with the apparatus. This section introduces the optic-flow direction constraint and describes a method that relies on short-term inertial navigation and the direction of the translational optic-flow in order to estimate ego-motion, defined as the velocity estimate (that describes the speed amplitude and the direction of motion).
A key characteristic of the invention is the use of optic-flow without the need for any kind of feature tracking. Moreover, the algorithm uses the direction of the optic-flow and does not need the norm, thanks to the fact that the scale of the velocity is solved by the use of inertial navigation and changes in direction of the apparatus.

### 3.1 Optic-flow

Optic-flow is defined as the apparent speed at which a scene is moving over a given portion of the field of view of an image sensor. It can be either described by a 2-D vector $\mathbf{p}_I$ expressed in the image sensor plane $I$, or as a 3D vector $\mathbf{p}$ expressed in an arbitrary reference frame. Several optic-flow extraction techniques exist, which typically do not require high resolution cameras or a lot of processing. Usually, optic-flow is computed using at least two consecutive acquisitions of visual information. Some methods include the variation of light intensity over time, or pattern displacement, or possibly feature tracking. Many optic-flow sensors exist in very small and cheap packages.

### 3.2 Translational Optic-flow direction constraint (TOFDC)

The measured 2D translational optic-flow vector expressed in the image plane of an optic-flow sensor moving in translation depends on the translational velocity, the predefined viewing direction of the sensor and the distance to the observed object. The norm of the translational optic-flow vector is proportional to the translation velocity, inversely proportional to the distance to the observed object, and depends on the angle between the predefined viewing direction and translational velocity. The direction of the translational optic-flow vector is in the opposite direction of the projection of the translational velocity onto the image plane. The direction of the 2D translational optic-flow vector is thus only dependent on the projection of the translational velocity onto the image plane, which can be obtained from the translational velocity and the orientation of the sensor (which is assumed to be known). On the other hand the norm of the translational optic-flow vector depends on the distance to the environment, which is generally unknown. The translational optic-flow direction constraint (TOFDC) describes the constraint on the projection of the translational velocity onto the image plane with respect to the direction of the 2D translational optic-flow vector only.

The TOFDC can be obtained analytically, such as by using the following formulas. Here's one way of expressing the translational optic-flow vector $\mathbf{p_t}$ in 3D:

$$p_t = -\frac{v - (v \cdot d)d}{D} \tag{1}$$

Where $\mathbf{d}$ is a unit vector pointing toward the predefined viewing direction of the sensor and is typically fixed in time and known (either by design, or from calibration), $\mathbf{v}$ the translational velocity vector and $D$ the distance to the object seen by the sensor. Note that if the distance $D$ to the obstacle is unknown, the velocity cannot be recovered from the translational optic-flow. However, equation (1) can be used to highlight the TOFDC, a direct relation between velocity and optic-flow, even for an unknown $D$.

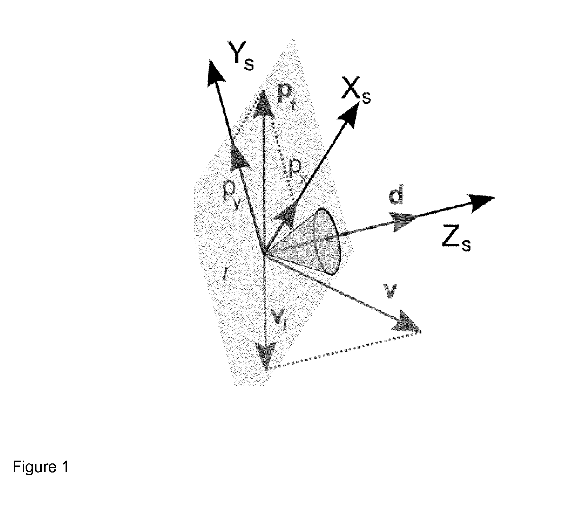

We first express equation (1) in the optic-flow sensor coordinate system ($Xs$, $Ys$, $Zs$) shown in fig. 1, in which $\mathbf{d}$ is a unit vector pointing toward the viewing direction of the sensor, $\mathbf{v}$ the translational velocity vector and $D$ the distance to the object seen by the sensor. The translational optic-flow direction constraint is expressed in the image plane $I$, and states that the projection $\mathbf{v}_I$ of the velocity vector $\mathbf{v}$ onto the image plane $I$ has to be colinear to the translational optic-flow vector $\mathbf{p}_{t,I}$ and of opposite direction :

$$p_{t,s} = -\frac{v_s - (v_s \cdot d_s) \cdot d_s}{D} \tag{2}$$

where:

$$p_{t,s} = \begin{bmatrix} p_{t,x} \\ p_{t,y} \\ 0 \end{bmatrix}, \quad d_s = \begin{bmatrix} 0 \\ 0 \\ 1 \end{bmatrix} \tag{3}$$

and

$$v_s = R_s v = \begin{bmatrix} v_{s,x} \\ v_{s,y} \\ v_{s,z} \end{bmatrix} \tag{4}$$

Since $\mathbf{p_t}$ lies in the image plane $I$, it only has two components, $p_{t,x}$ and $p_{r,y}$. $\mathbf{v_s}$ is the velocity vector expressed in the sensor axes, thanks to the rotation matrix $\mathbf{R_s}$ that describes the orientation of the sensor with respect to the apparatus' reference frame.

Equation (5) can be rewritten as:

$$\begin{bmatrix} p_{t,x} \\ p_{t,y} \\ 0 \end{bmatrix} = -\frac{1}{D}(\begin{bmatrix} v_{s,x} \\ v_{s,y} \\ v_{s,z} \end{bmatrix} - (\begin{bmatrix} v_{s,x} \\ v_{s,y} \\ v_{s,z} \end{bmatrix} \cdot \begin{bmatrix} 0 \\ 0 \\ 1 \end{bmatrix}) \cdot \begin{bmatrix} 0 \\ 0 \\ 1 \end{bmatrix}) \Leftrightarrow \begin{bmatrix} p_{t,x} \\ p_{t,y} \\ 0 \end{bmatrix} = -\frac{1}{D}\begin{bmatrix} v_{s,x} \\ v_{s,y} \\ 0 \end{bmatrix} \qquad (5)$$

The translational optic-flow direction constraint is obtained from the two first relations of equation (7), assuming that $D$ is unknown:

$$\mathbf{p}_{t,I} = -k\mathbf{v}_I \text{ with k>0} \qquad (6)$$

Where $\mathbf{p}_{t,I}$ and $\mathbf{v}_I$ are 2D vectors expressed in the image plane $I$, which is constructed by the two axes ($Xs$, $Ys$) (see fig. 1):

$$\mathbf{p}_{t,I} = \begin{bmatrix} p_{t,x} \\ p_{t,y} \end{bmatrix} \text{ and } \mathbf{v}_I = \begin{bmatrix} v_{s,x} \\ v_{s,y} \end{bmatrix} \qquad (7)$$

The translational optic-flow direction constraint (TOFDC) states that the projection $\mathbf{v}_I$ of the velocity vector $\mathbf{v}$ onto the image plane $I$ has to be collinear to the translational optic-flow vector $\mathbf{p}_{t,I}$ and of opposite direction.

An important characteristic of the TOFDC is that it does not rely on the optic-flow norm (and thus on any assumption about or estimation of the structure of the environment), but only on the optic-flow direction, and can thus be used in any situation with relatively high confidence and without approximation.

While the TOFDC does not provide any information about the velocity's amplitude, it gives some about its direction. An additional sensor modality is thus required to provide scale information, and make use of the information from the TOFDC.

### 3.2.1 Effect of rotation

If the moving apparatus experiences some angular rotations, an additional term due to rotation (rotational optic-flow) will be added to the measured optic-flow. The rotational optic-flow depends on the angular velocity and the predefined viewing direction. If the angular speed is known or measured, the rotational optic-flow can thus be calculated and subtracted from the measured optic-flow in order to obtain the translational optic-flow.

Typically, the rotational optic-flow $\mathbf{p_r}$, obtained by an optic-flow sensor experiencing rotational motions, can be expressed according to the following formula :

$$\mathbf{p}_r = -\omega \times \mathbf{d} \qquad (8)$$

Where $\omega$ is the angular speed vector.

The optic-flow obtained by an optic-flow sensor experiencing both rotational and translational motions is the simple addition of the rotational optic-flow $\mathbf{p_r}$ and translational optic-flow $\mathbf{p_t}$.

$$\mathbf{p} = \mathbf{p_r} + \mathbf{p_t} \qquad (9)$$

Translational optic-flow can thus easily be obtained from the optic-flow measured on a moving device experiencing both rotations and translations, if the angular speed $\omega$ is known or measured, by calculating and subtracting the rotational optic-flow :

$$p_t = p - p_r \qquad (10)$$

### 3.3 Inertial navigation

Inertial navigation is defined as the process of using inertial sensors, which provide a linear acceleration vector in the apparatus' reference frame, to estimate the velocity of the apparatus. Such a method relies on an initialization of the velocity estimate to a default value, and the integration over time of the linear acceleration vectors to obtain a velocity estimate prediction. An initialization to a default value is required, as inertial sensors only measure a rate of change, but not an absolute value. The initial default value should be as close as possible to the actual initial velocity of the apparatus, but can be set to any value (such as a vector of zeros) if the actual velocity is unknown. If the apparatus is at rest at the beginning of the velocity estimation process, the default value is typically initialized to a vector of zeros.

Since noise or offsets accumulate over time, the velocity estimate prediction eventually diverges from the true velocity, with a rate that depends on the quality of the sensors. Even though the velocity estimate prediction is fairly good for a short amount of time, this so-called drift is very substantial after several seconds already, ranging from tens to hundreds of meters per second of velocity drift after a few minutes depending on the type of motion and the inertial sensors used (typically cheap MEMS sensors are used). Such a drift can be improved by using many types of absolute sensors, that are used to correct the velocity estimate prediction to obtain a current velocity estimate that is closer to the true velocity.

Typically, inertial navigation can be applied in a discrete form thanks to the formula:

$$\mathbf{v}[k + 1] = \mathbf{v}[k] + \mathbf{u}[k] \cdot \delta t \qquad (11)$$

Where v[k + 1] is the velocity estimate prediction at each time step, u[k] is the linear acceleration vector obtained from the inertial sensors at each time step, and $\delta t$ is the period in seconds of each time step. The velocity estimate is initialized to a default value at k=0, such that v[0] = $\mathbf{v}_0$ is equal to the true velocity at k=0 or equal to a random vector (usually a vector of zeros) if the true velocity is unknown.

### 3.3.1 Inertial navigation with an IMU

A typical setup to achieve inertial navigation comprises strapped-down 3 axis rate gyroscopes and 3 axis accelerometers (hereinafter, an inertial measurement unit, or IMU). Other setups could comprise accelerometers mounted on an orientation-stabilized gimbal, which removes the need for centrifugal acceleration compensation and orientation estimation. In the case of the strapped-down IMU, the orientation of the setup has to be estimated in order to remove the gravity component from the measured accelerations, and possibly the centrifugal accelerations..

Linear accelerations in the apparatus' frame **u** can typically be obtained by removing the gravity *g* and the centrifugal accelerations from the measured accelerations **a** thanks to the following equation:

$$u = a - R^{-1} \cdot \begin{bmatrix} 0 \\ 0 \\ -g \end{bmatrix} - \omega \times v_r \qquad (12)$$

where **R** is the rotation matrix describing the absolute orientation of the apparatus, $\omega$ is the angular speed and $\mathbf{v_r}$ is the velocity estimate in the apparatus frame.

To estimate the orientation of an IMU, the angular rates measured by the rate gyroscopes can be integrated over time to obtain an absolute orientation. Several techniques exist to do so One suggested solution is to express the orientation thanks to quaternions $q = [q0\ q1\ q2\ q3]^T$, of unitary norm: $|q| = \sqrt{q_0^2 + q_1^2 + q_2^2 + q_3^2} = 1$.

The rotation of the quaternions vector due to an angular speed $\omega = [wx\ wy\ wz]^T$) can be described with formula (13).

$$\dot{q} = \frac{1}{2} Q \cdot q \qquad (13)$$

Where:

$$Q = \begin{bmatrix} 0 & -w_x & -w_y & -w_z \\ w_x & 0 & w_z & -w_y \\ w_y & -w_z & 0 & w_x \\ w_z & w_y & -w_x & 0 \end{bmatrix} \qquad (14)$$

The rotation matrix **R** (or DCM, direction Cosine Matrix) is obtained with equation (15).

$$R = \begin{bmatrix} 1 - 2(q_2^2 + q_3^2) & 2(q_1 \cdot q_2 - q_0 \cdot q_3) & 2(q_0 \cdot q_2 + q_1 \cdot q_3) \\ 2(q_0 \cdot q_3 + q_1 \cdot q_2) & 1 - 2(q_1^2 + q_3^2) & 2(q_2 \cdot q_3 - q_0 \cdot q_1) \\ 2(q_1 \cdot q_3 - q_0 \cdot q_2) & 2(q_0 \cdot q_1 + q_2 \cdot q_3) & 1 - 2(q_1^2 + q_2^2) \end{bmatrix} \qquad (15)$$

In general, the orientations drifts due to noise or biases present in the rate gyroscope measurements. It is often assumed that on average, the accelerometers measure gravity, and thus the indication of where down is. Therefore, a solution to the orientation drift is to compare the accelerometer measurements

$z = [ax\ ay\ az]^T$ to the gravity vector rotated in the apparatus frame $h = R^{-1} \cdot [0\ 0\ - g]^T$ and to correct for long-term errors. Note that this technique only corrects the pitch and roll angles, as gravity does not provide any information about the absolute orientation around the yaw angle.

### 3.4 Sensor fusion implementation

A contribution of this invention is the use of the TOFDC described in chapter 3.2 to correct for the inertial navigation drift described in chapter 3.3 in order to obtain the apparatus' velocity estimate after an iterative estimation process over multiple steps. This process uses both some information from inertial sensors and optic-flow sensors, and is thus a sensor fusion process.

As described in section 3.2, the TOFDC does not provide an absolute measurement of the true velocity and can thus not be used to correct the velocity estimate prediction to a correct value in one step. However, the TOFDC constrains one degree of freedom of the velocity estimate prediction. If several optic-flow sensors are used, multiple TOFDC can be applied, and up to two degrees of freedom of the velocity estimate prediction can be constrained, keeping one degree of freedom unobserved at each time step. The key is that the unobserved degree of freedom is along the direction of motion of the apparatus, and thus it changes if the direction of motion changes. All components of the velocity estimate are sufficiently observed if the apparatus undergoes sufficient changes in direction of motion, which mitigates the drift along the instantaneous unobserved degree of freedom. If the apparatus moves along the same direction for a long time, the velocity estimate along the direction of motion might become imprecise. Some applications inherently involve frequent changes of direction that are suitable for a relatively precise velocity estimation. In other applications, changes of direction might have to be actively provoked in order to keep the velocity estimation precise.

Some sensor fusion algorithms can associate a confidence value or error value to each of the velocity estimate components. Typically, the confidence in the estimation increases with the quantity and quality of measurements. Such values can be used to actively trigger changes of direction of the mobile device when they reach a threshold, in order to keep the velocity estimation precise. Since the TOFDC reduces the error of the velocity components perpendicular to the direction of motion, the mobile device should be controlled so as to move toward the direction corresponding to the highest confidence of the current velocity estimate in order to maximize the confidence of all components.

To obtain a good velocity estimation, the two methods described in sections 3.2 and 3.3, namely the optic-flow direction constraint and the inertial navigation, can be fused using any iterative estimation process. Such processes typically operate in at least two stages, namely the prediction stage and measurement stage (or update stage).

The prediction stage typically generates a velocity estimate prediction from a current velocity estimate by applying the inertial navigation operations described in section 3.3.

The update stage typically corrects the velocity estimate prediction so that the new velocity estimate respects the TOFDC or is closer to respecting the TOFDC.

The update stage usually involves calculating error values and finding a new velocity estimate that decreases, minimizes or cancels these error values. These error values describe how far is the current velocity estimate from respecting the TOFDC.

The error values are obtained from the comparison of two elements: 1) the direction (or a mathematical representation thereof) of the translational optic-flow measured by the optic-flow sensors. 2) the direction (or a mathematical representation thereof) of a predicted translational optic-flow calculated from the current velocity estimate and predefined viewing direction of the corresponding optic-flow sensor thanks to a measurement function.

The corrections to the current velocity estimate are calculated so that the error values are decreased, minimized or canceled. They can be obtained by using for example gradient descent (such as linear least squares) or any kind of optimization process. These corrections can also be weighted in function of the confidence given to the optic-flow sensor measurement, so as to not correct as much the current velocity estimate when the measurement is expected to be less precise.

One example to obtain an error value is by subtracting: 1) the angle in degrees with respect to the x axis of the measured translational optic-flow 2D vector, 2) from the angle in degrees with respect to the x axis of the predicted translational optic-flow 2D vector that is calculated thanks to the measurement function. The measurement function in this case would determine the direction of the predicted translational optic-flow by calculating the angle of the vector $-\mathbf{v}_I$, which is the projection of the current velocity estimate $\mathbf{v}$ onto the optic-flow sensor's image plane $I$ (see section 3.2).

Another example to obtain error values is by subtracting: 1) the components of the normalized (vector norm is set to 1) measured translational optic-flow 2D vector, 2) from the normalized predicted translational optic-flow 2D vector that is calculated thanks to the measurement function. The measurement function in this case would determine the normalized predicted translational optic-flow vector by calculating the unit vector $-\dfrac{\mathbf{v}_I}{\left\|\mathbf{v}_I\right\|}$ from the vector $-\mathbf{v}_I$, which is the projection of the current velocity estimate $\mathbf{v}$ onto the optic-flow sensor's image plane $I$ (see section 3.2).

### 3.4.1 Extended Kalman filter

An example of an Extended Kalman filter (EKF) implementation is proposed in the following paragraphs. For clarity, the EKF equations are copied below:

Prediction (denoted with the ˜):

$$\tilde{x}_k = f[x_{k-1}] \tag{16}$$

$$\tilde{P}_k = \Phi_k P_{k-1} \Phi_k^{\mathsf{T}} + Q_{k-1} \tag{17}$$

Update:

$$K_k = \tilde{P}_k H_k^{\mathsf{T}} (H_k \tilde{P}_k H_k^{\mathsf{T}} + R_k)^{-1} \tag{18}$$

$$\mathsf{x}_k = \tilde{\mathsf{x}}_k + \mathsf{K}_k (\mathsf{z}_k - h[\tilde{\mathsf{x}}_k]) \qquad (19)$$

$$\mathsf{P}_k = (I - \mathsf{K}_k \mathsf{H}_k)\tilde{\mathsf{P}}_k \qquad (20)$$

The state of the Kalman filter is the 3 velocity components in the apparatus frame:

$$\mathsf{x} = \mathsf{v}_r = \begin{bmatrix} v_x \\ v_y \\ v_z \end{bmatrix} \qquad (21)$$

**3.4.2 Prediction stage**

The prediction step consists of the inertial navigation:

$$f[\mathsf{x}_{k-1}] = \mathsf{x}_{k-1} + \mathsf{u} \cdot \delta t \qquad (22)$$

where u is described in equation (10).
With the corresponding state transition matrix:

$$\Phi_k = \begin{bmatrix} 1 & w_z \cdot \delta t & -w_y \cdot \delta t \\ -w_z \cdot \delta t & 1 & w_x \cdot \delta t \\ w_y \cdot \delta t & -w_x \cdot \delta t & 1 \end{bmatrix} \qquad (23)$$

**3.4.3 Update stage**

The update step consists of applying the optic-flow direction constraint described in equation (12). In order to remove the unknown k, the unit vectors are used:

$$\frac{\mathsf{p}_{t,l}}{\|\mathsf{p}_{t,l}\|} = -\frac{\mathsf{v}_l}{\|\mathsf{v}_l\|} \qquad (24)$$

Which implies, for each optic-flow sensor, the measurement:

$$\mathsf{z}_k = \frac{\mathsf{p}_{t,l}}{\|\mathsf{p}_{t,l}\|} \qquad (25)$$

And the measurement function:

$$h\left[\tilde{\mathsf{x}}_k\right] = -\frac{\mathsf{v}_I}{\left\|\mathsf{v}_I\right\|} \qquad (26)$$

where

$$\mathsf{v}_I = \begin{bmatrix} v_{s,1} \\ v_{s,1} \end{bmatrix} = \begin{bmatrix} r_{s,11} & r_{s,12} & r_{s,13} \\ r_{s,21} & r_{s,22} & r_{s,23} \end{bmatrix} \begin{bmatrix} v_x \\ v_y \\ v_z \end{bmatrix} \qquad (27)$$

With $r_{s,ij}$ forming the first two rows of the rotation matrix describing the orientation of each optic-flow sensor.
The corresponding 2 x 3 jacobian matrix $\mathsf{H}_k$ comprises the following elements:

$$\mathsf{H}_{k,ij} = \frac{-r_{s,ij}}{\left\|\mathsf{v}_I\right\|} + \frac{v_{s,i} \cdot \left(v_{s,1} \cdot r_{s,1j} + v_{s,2} \cdot r_{s,2j}\right)}{\left\|\mathsf{v}_I\right\|^3} \qquad (28)$$

### 3.4.4 Bias estimation

An augmented EKF allows to estimate the constant biases b of the accelerometer sensors, by using the following state:

$$\mathsf{x} = \begin{bmatrix} v_x \\ v_y \\ v_z \\ b_x \\ b_y \\ b_z \end{bmatrix} \qquad (29)$$

The prediction step becomes slightly modified:

$$f\left[\mathsf{x}_{k\text{-}1}\right] = \mathsf{x}_{k\text{-}1} + \begin{bmatrix} (\mathsf{u}+\mathsf{b}) \cdot \delta t \\ 0 \end{bmatrix} \qquad (30)$$

$$\Phi_k = \begin{bmatrix} 1 & w_z \cdot \delta t & -w_y \cdot \delta t & \delta t & 0 & 0 \\ -w_z \cdot \delta t & 1 & w_x \cdot \delta t & 0 & \delta t & 0 \\ w_y \cdot \delta t & -w_x \cdot \delta t & 1 & 0 & 0 & \delta t \\ & 0_{3\times3} & & & I_{3\times3} & \end{bmatrix} \qquad (31)$$

**References**

[1] Y.-S. Chen, L.-G. Liou, Y.-P. Hung, and C.-S. Fuh, "Three-dimensional ego-motion estimation from motion fields observed with multiple cameras," Pattern Recognition, vol. 34, no. 8, pp. 1573-1583, Aug. 2001.

[2] G. L. Barrows, J. S. Humbert, A. Leonard, C. W. Neely, and T. Young, "Vision Based Hover in Place," 2006.

[3] T. Lupton and S. Sukkarieh, "Removing scale biases and ambiguity from 6DoF monocular SLAM using inertial," 2008 IEEE International Conference on Robotics and Automation, pp. 3698-3703, May 2008.

[4] F. Kendoul, I. Fantoni, and K. Nonami, "Optic flow-based vision system for autonomous 3D localization and control of small aerial vehicles," Robotics and Autonomous Systems, vol. 57, pp. 591-602, 2009.

[5] S. Weiss, M. W. Achtelik, S. Lynen, M. Chli, and R. Siegwart, "Real-time Onboard Visual-Inertial State Estimation and Self-Calibration of MAVs in Unknown Environments," in Proceedings 2012 IEEE International Conference on Robotics and Automation, vol. 231855, 2012.

[6] D. D. Diel, P. DeBitetto, and S. Teller, "Epipolar Constraints for Vision-Aided Inertial Navigation," IEEE Workshop on Motion and Video Computing (WACV/MOTION'05) - Volume 2, pp. 221-228, Jan. 2005.

[7] A. Mourikis and S. Roumeliotis, "A multi-state constraint Kalman filter for vision-aided inertial navigation," in Robotics and Automation, 2007 IEEE International Conference on. IEEE, 2007, pp. 3565-3572.

[8] C. N. Taylor, "Enabling Navigation of MAVs through Inertial, Vision, and Air Pressure Sensor Fusion," Electrical Engineering, vol. 35, pp. 143-158, 2009.

[9] T. P. Webb, R. J. Prazenica, A. J. Kurdila, and R. Lind, "Vision-Based State Estimation for Autonomous Micro Air Vehicles," Journal of Guidance, Control, and Dynamics, vol. 30, no. 3, pp. 816-826, May 2006.

**Claims**

1. Method to determine the direction and the amplitude of a current velocity estimate of a moving device comprising at least an optic-flow sensor producing at least a 2D optic-flow vector and an inertial sensor producing a linear acceleration vector, said optic-flow sensor having a predefined viewing direction relative to the moving device, said method comprising the steps of:

   a. initializing to a default value a direction and amplitude of a current velocity estimate,
   b. acquiring a linear acceleration vector from the inertial sensor,
   c. calculating a velocity estimate prediction from the current velocity estimate and the linear acceleration vector by integrating the linear acceleration over time,
   d. acquiring an optic-flow vector from at least one optic-flow sensor,
   e. determining at least one measured direction value, a mathematical representation of the optic-flow direction from each optic-flow vector
   f. calculating at least one direction prediction value, a mathematical representation of an optic-flow direction prediction in function of a velocity estimate prediction and a predefined viewing direction
   g. calculating at least one error value between each measured direction value and the corresponding direction prediction value,
   h. applying a correction to the velocity estimate prediction to obtain a new velocity estimate, said correction being determined thanks an optimization process so as to reduce the error value(s)
   i. defining the current velocity estimate equal to the new velocity estimate
   j. repeating the steps b to i.

2. Method of claim 1, wherein the inertial sensor is a strapped down type comprising one accelerometer per axis, and one rate gyroscope per axis, the step of acquiring a linear acceleration vector comprising the steps of :

- initializing to a default value a current orientation estimate,
- acquiring angular speeds from the rate gyroscopes,
- calculating an orientation estimate prediction from a current orientation estimate and the angular speeds by integrating the angular speeds over time,
- determining a projection of the gravity vector along each axis of the mobile device based on the orientation estimate prediction,
- acquiring measured accelerations from the accelerometers,
- subtracting the projection of the gravity vector to the measured accelerations to obtain linear accelerations.

3. Method of claim 2, wherein centrifugal acceleration is further subtracted from the linear accelerations, where the centrifugal acceleration are calculated as the cross product of the angular speeds vector with the current velocity estimate vector.

4. Method of any of the claims 1 or 3, wherein the measured direction values are defined as follows :

- the 2D unit vector of the 2D optic-flow vector

And the direction prediction value is obtained as follows :

- calculating from the velocity estimate prediction, a 2D projection vector on the plane perpendicular to the predefined viewing direction,
- calculating the opposite projection vector by taking the negative of the projection vector
- calculating the 2D unit vector of the opposite projection vector

5. Method of any of the claims 1 to 4, wherein the correction applied to the velocity estimate prediction is weighted accordingly to the confidence in the 2D optic-flow vector precision.

6. Method of any of the claims 1 to 5, wherein the correction applied to the velocity estimate prediction is determined thanks to an extended Kalman filter update.

7. Method of any of the claims 1 to 6, wherein the inertial sensor comprises one rate gyroscope per axis, the step of acquiring the optic-flow vector comprising :

- acquiring angular speeds from the rate gyroscopes,
- calculating a rotational optic-flow estimate from the angular speeds and the predefined viewing direction,
- obtaining the optic-flow vector by subtracting the acquired optic-flow vector by the rotational optic-flow estimate.

8. Method of any of the claims 1 to 7, wherein the moving device is forced to change direction at frequent intervals in time in order to enhance the precision of the current velocity estimate,

9. Method of any of the claims 1 to 7, wherein the moving device is actively controlled so as to improve the confidence in the current velocity estimate, by moving toward the direction corresponding to the highest confidence of the current velocity estimate

10. Method of any of the claims 1 to 9, wherein a bias vector is added to the linear acceleration vector, the bias vector being incremented at each step proportionally to the correction to the velocity estimate prediction

11. Method of any of the claims 1 to 10, wherein the mobile device is a flying robot.

Figure 1

Europäisches
Patentamt

European
Patent Office

Office européen
des brevets

**EUROPEAN SEARCH REPORT**

Application Number

EP 12 19 1669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 912 464 B1 (PARKER DAVID R [GB]) 28 June 2005 (2005-06-28) * column 1, line 6 - line 8; figure 1 * * column 4, line 30 - column 5, line 60 * ----- | 1,2,4,7, 10 | INV. G01C21/16 G01C22/00 |
| X,D | F. KENDOUL; FANTONI; K. NONAMI: "Optic flow-based vision system for autonomous 3D localization and control of small aerial vehicles", ROBOTICS AND AUTONOMOUS SYSTEMS, vol. 57, 2009, pages 591-602, XP002695152, * page 595 - page 597; figure 5 * ----- | 1,2,6,11 | |
| X | US 2011/206236 A1 (CENTER JR JULIAN L [US]) 25 August 2011 (2011-08-25) * paragraph [0025] - paragraph [0137]; figures 1,2 * ----- | 1 | |
| A | US 2010/318294 A1 (ROSING HOWARD S [US] ET AL) 16 December 2010 (2010-12-16) * paragraphs [0151], [0187] * ----- | 2 | |
| A | US 2012/022510 A1 (WELCHES RICHARD SHAUN [US] ET AL) 26 January 2012 (2012-01-26) * paragraph [0150] * ----- | 2 | TECHNICAL FIELDS SEARCHED (IPC) G01C A61B G01P |
| A | US 2008/134783 A1 (JENG SHENG-WEN [TW] ET AL) 12 June 2008 (2008-06-12) * paragraph [0028] * ----- | 3 | |

The present search report has been drawn up for all claims

| Place of search | Date of completion of the search | Examiner |
|---|---|---|
| The Hague | 10 April 2013 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                      
& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 12 19 1669

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2013

| Patent document cited in search report | | Publication date | Patent family member(s) | | Publication date |
|---|---|---|---|---|---|
| US 6912464 | B1 | 28-06-2005 | FR | 2857740 A1 | 21-01-2005 |
| | | | GB | 2362213 A | 14-11-2001 |
| | | | US | 6912464 B1 | 28-06-2005 |
| US 2011206236 | A1 | 25-08-2011 | NONE | | |
| US 2010318294 | A1 | 16-12-2010 | US | 2010318294 A1 | 16-12-2010 |
| | | | WO | 2010144691 A1 | 16-12-2010 |
| US 2012022510 | A1 | 26-01-2012 | EP | 2403424 A1 | 11-01-2012 |
| | | | JP | 2012519554 A | 30-08-2012 |
| | | | US | 2012022510 A1 | 26-01-2012 |
| | | | WO | 2010102246 A1 | 10-09-2010 |
| US 2008134783 | A1 | 12-06-2008 | JP | 4753912 B2 | 24-08-2011 |
| | | | JP | 2008146620 A | 26-06-2008 |
| | | | TW | 200825866 A | 16-06-2008 |
| | | | US | 2008134783 A1 | 12-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y.-S. CHEN ; L.-G. LIOU ; Y.-P. HUNG ; C.-S. FUH.** Three-dimensional ego-motion estimation from motion fields observed with multiple cameras. *Pattern Recognition,* August 2001, vol. 34 (8), 1573-1583
- **G. L. BARROWS ; J. S. HUMBERT ; A. LEONARD ; C. W. NEELY ; T. YOUNG.** *Vision Based Hover in Place,* 2006
- **T. LUPTON ; S. SUKKARIEH.** Removing scale biases and ambiguity from 6DoF monocular SLAM using inertial. *2008 IEEE International Conference on Robotics and Automation,* May 2008, 3698-3703
- **F. KENDOUL ; I. FANTONI ; K. NONAMI.** Optic flow-based vision system for autonomous 3D localization and control of small aerial vehicles. *Robotics and Autonomous Systems,* 2009, vol. 57, 591-602
- **S. WEISS ; M. W. ACHTELIK ; S. LYNEN ; M. CHLI ; R. SIEGWART.** Real-time Onboard Visual-Inertial State Estimation and Self-Calibration of MAVs in Unknown Environments. *Proceedings 2012 IEEE International Conference on Robotics and Automation,* 2012, vol. 231855

- **D. D. DIEL ; P. DEBITETTO ; S. TELLER.** Epipolar Constraints for Vision-Aided Inertial Navigation. *IEEE Workshop on Motion and Video Computing (WACV/MOTION'05),* January 2005, vol. 2, 221-228
- **A. MOURIKIS ; S. ROUMELIOTIS.** A multi-state constraint Kalman filter for vision-aided inertial navigation. *Robotics and Automation, 2007 IEEE International Conference,* 2007, 3565-3572
- **C. N. TAYLOR.** Enabling Navigation of MAVs through Inertial, Vision, and Air Pressure Sensor Fusion. *Electrical Engineering,* 2009, vol. 35, 143-158
- **T. P. WEBB ; R. J. PRAZENICA ; A. J. KURDILA ; R. LIND.** Vision-Based State Estimation for Autonomous Micro Air Vehicles. *Journal of Guidance, Control, and Dynamics,* May 2006, vol. 30 (3), 816-826